# EUROPEAN PATENT APPLICATION

(11) **EP 2 316 275 A1**
(43) Date of publication of application: **04.05.2011**
(21) Application number: 10187314.9
(22) Date of filing: 12.10.2010
(51) Int. Cl.: A23G 9/28, A23G 9/30, B67D 1/14

(54) **Machine for making and dispensing iced food products such as granitas, sorbets or slush drinks and the like**

(30) Priority: 29.10.2009 IT BO20090706
(71) Applicant: Carpigiani Group - ALI S.p.A., 40011 Anzola Dell'Emilia (BO) (IT)
(72) Inventor: Cocchi, Andrea, 40012, CALDERARA DI RENO (Bologna) (IT); Escriva Estruch, Vicente, GANDIA (Valencia) (ES)
(74) Representative: Ghioni, Carlo Raoul Maria

(57) **Abstract**

A machine (1) for making and dispensing iced food products such as granitas, sorbets and the like, comprises at least one tank (3) for containing and processing the product to be dispensed, a tap (4) comprising a pipe (8) for dispensing the iced product and mounted on the wall (6), a control unit (13) for mounting a plug (11) used to open and close the pipe (8). Means are provided for disengaging the control unit (13) from the wall (6) to allow the pipe (8) and the component parts of the control unit (13) itself to be cleaned and washed.

## Description

This invention relates to a machine for making and dispensing iced food products such as granitas, sorbets or slush drinks and the like.

Machines of this kind, commonly known as crushed-ice drink makers or sorbet makers, generally comprise a tank of transparent material, mounted on a supporting base and in which a fluid is mixed and chilled and eventually dispensed in the form of a granita, sorbet or slush drink through a tap mounted at the front of the machine, near the bottom of the tank.

The tank is closed at the top by a removable lid and contains at the bottom of it a screw type stirring element and an evaporator of a cooling circuit.

The evaporator is cylindrical in shape and is coaxially surrounded by the stirrer, which is rotationally driven about its axis by an electric motor in order to mix the product inside the tank and scrape the ice that tends to form on the outside surface of the evaporator.

The tank is in the shape of a parallelepiped, with the exception of its bottom portion which is substantially cylindrical in such a way as to partly surround the periphery of the stirrer-evaporator assembly.

The bottom portion is closed at a longitudinal end of it by a wall having a product discharge hole at the bottom of it and provided, above that hole, with projections for mounting the tap.

The tap comprises a tubular cylindrical body forming a dispensing pipe whose axis is parallel to the axis of the cylindrical portion and protruding from the end wall in such a way as to connect the discharge hole to a dispensing nozzle having a substantially vertical axis.

The tap also comprises a cylindrical plug movable in plunger like manner between a position for opening the dispensing pipe, to allow the product to be dispensed, and a position for closing the dispensing pipe.

The plug is provided at an axial end of it with an elastic wiping and scraping seal.

At the bottom of it, the plug has an arcuate wall whose axis is parallel to the axis of the nozzle and which is adapted to act in conjunction with the latter to correctly direct the flow of the product. The tap further comprises a unit for controlling the plug (as described for example in patent application BO2009A000416 in the name of the same Applicant as this invention) for imparting to the latter a movement of oscillation between the open and closed positions.

The control unit is a lever-operated assembly and comprises a rocker pivoted on a pin which is supported by the above mentioned projections on the front wall of the tank and which is equipped with an actuating arm and a mounting arm for the plug. Obviously, machines of this kind, and in particular the component parts of the dispensing type must comply with stringent hygiene regulations and must therefore be cleaned thoroughly and frequently.

For this purpose, the plug and the respective control unit must be removed completely to provide access to the dispensing pipe and also to break the control unit down into its component parts.

In machines of the type described, this operation may need to be carried out two or more times a day and is a time consuming and painstaking task.

The aim of this invention is to provide a machine for making and dispensing iced food products, such as granitas, sorbets and the like, which completely overcomes the disadvantages of the prior art machines.

This invention accordingly provides a machine for making and dispensing iced food products such as granitas, sorbets and the like comprising the features defined in any of the appended claims.

The invention will now be described, by way of example only and without limiting its scope, with reference to the accompanying drawings, in which:
- Figure 1 is a perspective view of a portion of the machine according to this invention;
- Figure 2 is an exploded view of the portion of the machine illustrated in Figure 1;
- Figure 3 and Figure 4 are side views of a detail from Figure 1 in two different operating conditions;
- Figure 5 is a perspective view of the same detail from Figure 1 in a further operating condition. With reference to Figures 1 and 2, the numeral 1 denotes in its entirety a machine for making and dispensing iced food products such as granitas, sorbets and the like.

The machine comprises a tank 3 of transparent material, mounted on a supporting base 2 and in which a fluid is mixed and chilled and eventually dispensed in the form of a granita or sorbet.

The iced product is dispensed through a tap 4 mounted on the front of the machine, at a substantially cylindrical portion 5 which has a horizontal axis, labelled L, and which houses a stirrer-evaporator assembly, not illustrated, forming part of a cooling circuit of known type.

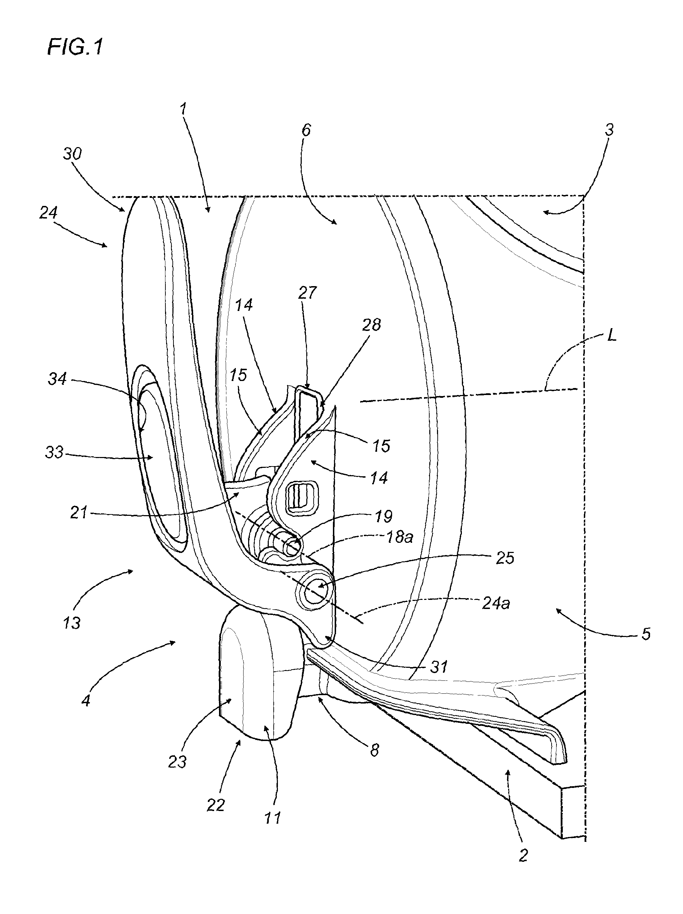

On the left, looking at Figure 1, the bottom portion 5 is closed by a front wall 6 having at the bottom of it a hole 7 for discharging the iced products.

The tap 4 comprises a dispensing pipe 8 consisting of a tubular portion 9, which has an axis parallel to the axis L and which protrudes from the wall 6, and a dispensing nozzle 10, whose axis is transversal to the axis L and which is directed towards the base 2.

The tap 4 also comprises a substantially cylindrical plug 11 movable between a position for closing the tubular portion 9 and a tubular portion 9 extracted position for opening the dispensing pipe 8 to allow the iced product to be dispensed. The plug 11, which is made as a single part of deformable elastic material, consists of a cylindrical body provided, at an axial end of it, with an annular scraping and sealing lip 12.

The tap 4 further comprises a control unit 13, consisting of lever means, for imparting to the plug 11 an oscillating movement between the above mentioned opening and closing positions.

It should be noted that the movement between these positions along the dispensing pipe is allowed by the elastic deformability of the plug 11, which enables it to follow a rectilinear path along the axis of the tubular portion 9, although the control unit 13 imparts to the plug 11 a movement along an arcuate trajectory.

The control unit 13 is supported by the front wall 6 by means of two projections 14 extending at right angles to the wall 6 in vertical planes and parallel with each other.

The two projections 14, which are spaced from each other by a certain amount, have an arcuate profile 15 broken by a groove 16 and joined at the bottom to the wall 6 by a concave section labelled 17.

The control unit 13 comprises a first rocker 18 equipped, at an intermediate position of it, with two cylindrical protrusions 19, coaxial with each other and transversal to the axis L, which are designed to be slotted into the socket, labelled 20, formed by the grooves 16 of the projections 14. The rocker 18 is therefore designed rotate about an axis 18a, at right angles to the axis L, inside the socket 20.

On opposite sides of the axis 18a, the rocker 18 has a first, upper actuating arm 21 and a second, lower mounting arm 22 for the plug 11.

The lower arm 22 is fitted at the end of it with an arcuate plate 23 which acts as a splash guard and which, when the pipe 8 is open, faces the nozzle 10 so as to form, in combination with the latter, a tubular product dispensing flow guide.

The control unit 13 also comprises a second rocker 24, connected to the first rocker 18 by a hinge formed by two further cylindrical protrusions 25 extending coaxially on opposite sides of the second arm 22 in parallel with the protrusions 19 and under the latter.

The second protrusions 25 are designed to be slotted inside the socket, labelled 26, formed by the two concave sections 17 of the projections 14. The rocker arm 24 is therefore designed rotate about an axis 24a, at right angles to the axis L, inside the socket 26.

The control unit 13 also comprises an elastic element consisting of a spring 27 interposed between the front wall 6 and the two rockers 18 and 24 in such a way as to elastically hold the cylindrical protrusions 19 and 25 within the sockets 20 and 26 and to apply an action opposing the rotation of the two rockers about the respective axes of rotation 18a, 24a.

More specifically, the spring 27 comprises an upper portion 28 in the shape of an upturned U adhering to the wall 6 between the two projections 14.

The two free lower ends, labelled 29, of the U-shaped portion are folded in hook-like fashion in vertical planes transversal to the wall 6, in such a way that each encircles and elastically engages one protrusion 19 and one protrusion 25, thereby holding the rockers 18 and 24 within the respective sockets 20 and 26.

The second rocker 24 comprises an upper arm 30, extending outside the arm 21, relative to the wall 6, and a second, lower arm 31 designed to abut and engage with its free end the front wall 6.

The upper arm 30 of the second rocker 24, whose free end extends beyond that of the arm 21, forms the handgrip of the control unit 13 and on the side of it facing the wall 6, has a housing 32 for one end 33 of the arm 21.

At the housing 32, the arm 30 features a through opening 34, of a size such as not to allow the end 33 to pass through it, thus preventing rotation in a counterclockwise direction (looking at Figure 1) of the arm 21 relative to the arm 30.

For reasons that will become clear as this description continues, the through opening 34 allows a machine user to actuate the first rocker 18 directly, by turning it clockwise independently of the second rocker 24.

We now consider the machine in the condition illustrated in Figure 1, where the plug 11 is in the position for closing the dispensing pipe 8 and the handgrip 30 is in a substantially vertical position.

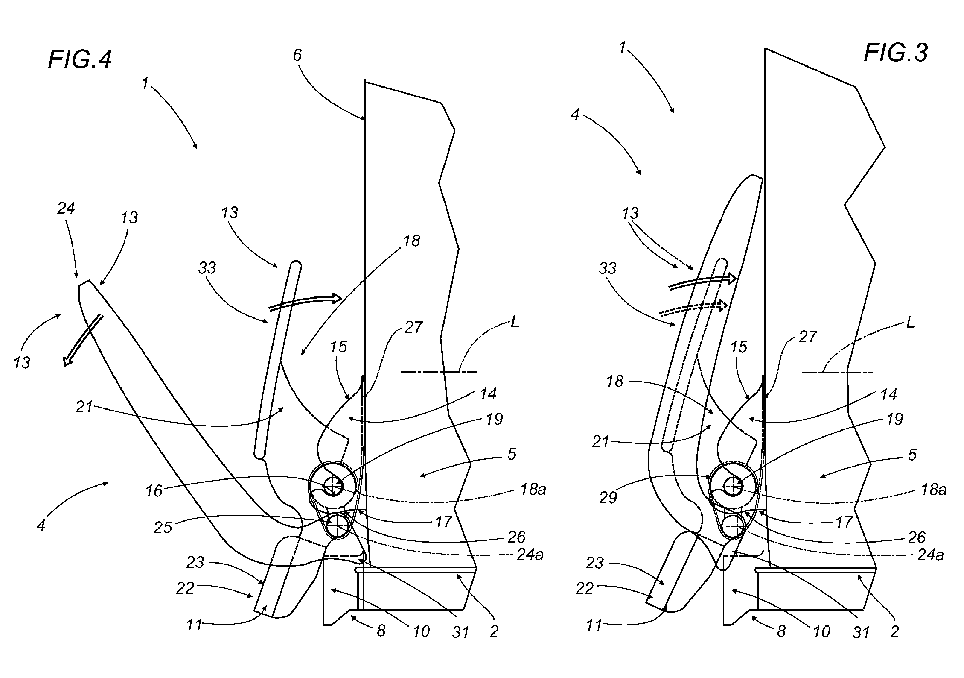

In use, in a first mode of operating the tap 4, illustrated in Figure 3, the machine user turns the handgrip 30 clockwise, overcoming the resistance of the spring 27, until the upper end of the arm 30 comes into contact with the wall 6.

In the example illustrated, contact is made after turning through an angle of between 20° and 25°.

As the rocker 24 rotates inside the socket 26, formed by the concave section 17, its arm 30 engages the arm 21 of the rocker 18 which rotates clockwise in the socket 20 and moves the lower arm 22 away from the wall 6, thereby extracting the plug 11 and dispensing the product through the nozzle 10.

When dispensing is over, the handgrip 30 is turned counterclockwise back to the vertical position, with the aid of the spring 27, thus causing the plug 11 to close the pipe 8.

According to another method of operating the tap 4, illustrated in Figure 4, the machine user can turn the handgrip 30 from the vertical position in counterclockwise, instead of clockwise, direction. In this case, the bottom arm 31 of the rocker 24 moves into contact with the wall 6 of the tank 3, causing the rocker 18 to turn in the opposite direction, that is, clockwise, in such manner as to move the arm 22 away from the wall 6 so as to extract the plug 11 from the dispensing pipe 8. Thus, the same movement for extracting the plug 11 can be obtained by operating the handgrip 30 either towards or away from the wall 6.

In both cases, the protrusions 25, retained by the spring 27, slide along the concave sections 17 of the projections 14 without coming out of the socket 26.

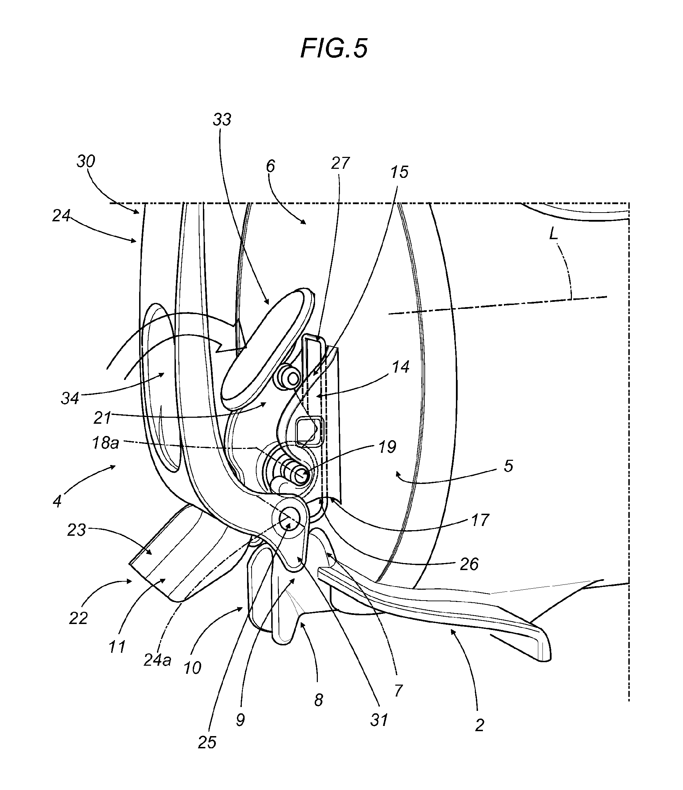

As illustrated in Figure 5, when the dispensing pipe 8 and the component parts of the tap 4 need to be cleaned, it is sufficient to impart to the rocker 18, a rotational clockwise movement by actuating the end of it 33 through the opening 34 until the arm 21 comes into contact with the wall 6.

As a result of this rotation, which in the example illustrated is substantially through an angle of 50°, the protrusions 25 slide along the concave sections 17 and away from the wall 6 until coming out of the socket 26.

This causes the spring 27 to be disengaged from the protrusions 19 and 25, the protrusions 19 to come out of the grooves 16 and the control unit 13 to be detached from the projections 14, thus allowing the plug 11 to be moved away from the mouth of the dispensing pipe 8.

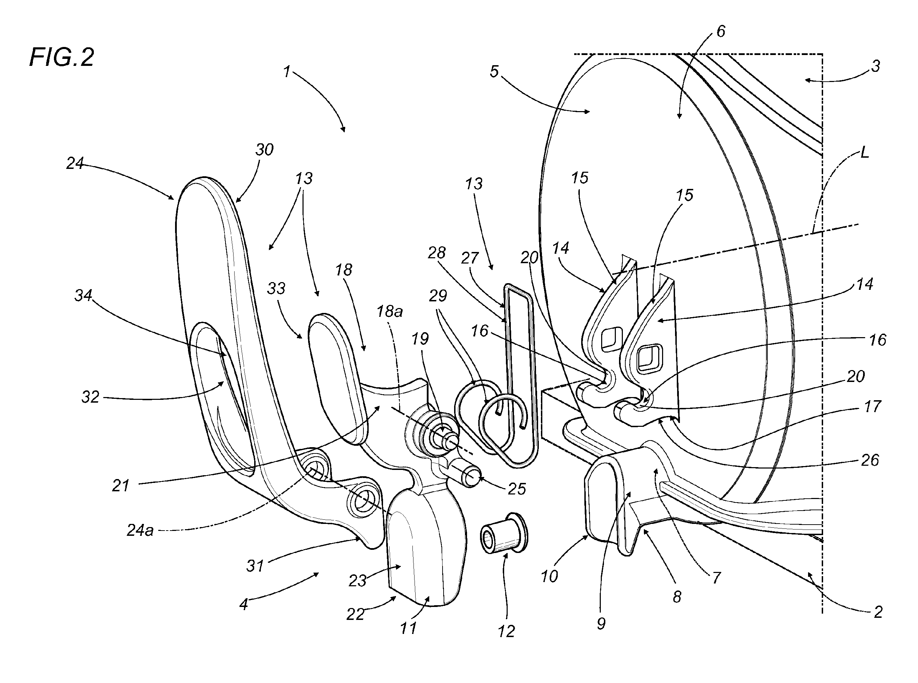

That way, by actuating the rocker 18, which, as may be inferred from the above, constitutes means for disengaging the control unit 13, the tubular portion 9 and the nozzle 10 of the pipe 8 are made accessible and, at the same time, the control unit 13 itself breaks down into its individual parts, as illustrated in Figure 2.

The above mentioned disengagement means are quick disengagement means, in the sense that, as described above, detaching and breaking down the control unit 13 are accomplished in a single operation without removing the connecting parts such as the connecting pins of the rockers and the related supporting means.

It is evident that the procedure for cleaning and washing the dispensing pipes and tap is much quicker and easier than in the prior art, also because of the smaller number of parts making up the control unit 13 compared to the prior art.

## Claims

1. A machine for making and dispensing iced food products such as granitas, sorbets or slush drinks and the like, comprising at least one tank (3) for containing and processing the product to be dispensed, a tap (4) mounted on a wall (6) of the tank (3), a pipe (8) for dispensing the iced product, a plug (11) supported by the wall (6) and movable between a position where it closes and a position where it opens the dispensing pipe (8), a control unit (13) for moving the plug (11) between the open and closed positions, the machine being **characterized in that** it further comprises means for disengaging the control unit (13) from the wall (6).

2. The machine according to claim 1, **characterized in that** the control unit (13) comprises the disengagement means (18).

3. The machine according to claim 2, **characterized in that** the control unit (13) comprises a first rocker (18) for supporting the plug (11), a second rocker (24), equipped with a handgrip (30) for operating the control unit (13), pivotally mounted on the first rocker, elastic means (27) for retaining the first rocker (18) and the second rocker (24) within respective sockets (20, 26) integral with the wall (6).

4. The machine according to claim 3, **characterized in that** the wall (6) supports the first rocker (18) and the second rocker (24) by means of at least one projection (14) whose profile (15) forms respective sockets (20, 26), located opposite each other, for receiving protrusions (19, 25) on the first rocker (18) and respectively defining the axis of rotation (18a) of the first rocker (18) and the axis of rotation (24a) of the second rocker (24).

5. The machine according to claim 4, **characterized in that** the wall (6) has two projections (14), forming, along their respective profiles (15), with grooves (16), the socket (20) for the protrusions (19), and with concave sections (17), the socket (26) for the protrusions (25).

6. The machine according to claims 3 to 5, **characterized in that** the means for disengaging the control unit (13) are defined by the first rocker (18), when it is rotated relative to the second rocker (24), by an angle such as to disengage the protrusions (25) from the respective socket (26).
